# EUROPÄISCHE PATENTSCHRIFT

(11) **EP 2 342 622 B1**
(45) Veröffentlichungstag und Bekanntmachung des Hinweises auf die Patenterteilung: **21.02.2018**
(21) Anmeldenummer: 09775550.8
(22) Anmeldetag: 30.06.2009
(51) Int. Cl.: G06F 3/042, G06F 3/033

(54) **STEUERFLÄCHE FÜR EINE DATENVERARBEITUNGSANLAGE**
CONTROL AREA FOR DATA PROCESSING DEVICE
SURFACE DE COMMANDE D'UN ÉQUIPEMENT DE TRAITEMENT DE DONNÉES

(30) Priorität: 15.07.2008 AT 10942008; 07.01.2009 AT 182009
(43) Veröffentlichungstag der Anmeldung: 13.07.2011
(73) Patentinhaber: isiQiri interface technologies GmbH, 4020 Linz (AT)
(72) Erfinder: EBNER, Richard, A-4600 Wels (AT); KOEPPE, Robert, A-4020 Linz (AT)
(74) Vertreter: Burgstaller, Peter
(86) Internationale Anmeldenummer: PCT/AT2009/000258
(87) Internationale Veröffentlichungsnummer: WO 2010/006348

(56) Entgegenhaltungen:
- EP-A2- 0 225 625
- EP-A2- 0 354 996
- WO-A1-2008/018768
- DE-A1- 3 413 372
- DE-A1- 3 511 757
- DE-A1- 3 544 290

## Beschreibung

Die Erfindung betrifft eine auf optischen Signalen basierende Steuerfläche für eine Datenverarbeitungsanlage sowie ein Verfahren zum Betrieb einer derartigen Steuerfläche.

In einem Teilaspekt davon betrifft die vorliegende Erfindung die Anwendung der Steuerfläche als Detektorfläche, welche als flexible Hüllfläche um einen oder an einem Körper angeordnet sein kann um zu detektieren ob und wo der Körper durch einen Leuchtzeiger getroffen wird.

Die US 2007/0176165 A1 zeigt eine Bauweise für einen auf lichtempfindlichen organischen Halbleitern basierenden flächig aufgebauten Positionsdetektor für einen auftreffenden Lichtpunkt. Der flächig aufgebaute Detektor bildet eine einzige großflächige Sensorzelle. Er besteht aus mehreren Schichten von denen mindestens eine Schicht photoaktiv ist. An seinem Rand ist der Positionsdetektor mit voneinander beabstandeten Anschlusselektroden versehen mittels derer ein elektrisches Signal abgenommen werden kann, aus welchem auf den Ort des Auftreffens eines Lichtstrahls geschlossen wird. Gegenüber einer Bauweise mit vielen nebeneinander angeordneten einzelnen lichtempfindlichen Zellen ist die Anordnung kostengünstiger und einfacher aufgebaut, allerdings bietet sie weniger Auflösung.

In der US 2007/0152985 A1 wird ein als flächiger Lichtwellenleiter ausgebildetes optisches Touchpad vorgestellt. Ein Gegenstand, welcher in Kontakt mit dem Wellenleiter des Touchpads ist, koppelt Licht aus einer externen Quelle über Streuung an der Oberfläche des Gegenstands in den Wellenleiter des Touchpads ein. Die Detektion des Orts der Einkopplung wird mit einem nicht näher beschriebenen photoelektrischen Detektor ermöglicht.

Durch die DE 34 13 372 A1 wird schon 1985 ein Detektor für den Auftreffpunkt eines Lichtstrahles auf einer Fläche öffentlich bekanntgemacht, wobei die Fläche ein Lumineszenzlichtwellenleiter ist, wobei photoelektrische Sensoren zueinander beabstandet am Rand der Fläche angeordnet sind und wobei aus den durch diese Sensoren gemessen Signalen durch eine elektronische Auswerteschaltung auf die genaue Position des Auftreffpunktes auf der Fläche rückgeschlossen wird. Dabei wird ausgenutzt, dass die Stärke der Signale an den photoelektrischen Sensoren mit der Entfernung der Sensoren vom Auftreffpunkt des Lichtstrahls auf der Fläche abnimmt. Es wird auch darauf hingewiesen, dass die anfallenden elektronischen Daten gespeichert werden können. Der Detektor wird bevorzugt als Zielscheibe verwendet, wobei die Waffe mit der man darauf zielt und "schießt" keine Projektil abfeuert sondern nur einen Lichtstrahl.

Die DE 35 44 290 A1 beschreibt eine Vorrichtung mit Hilfe derer Relativbewegung zwischen zwei Körpern gemessen werden kann, wobei der eine Körper eine Lichtquelle mitführt und der andere Körper eine Detektorfläche mitführt, welche ein Lumineszenzlichtwellenleiter ist, an dessen Rand voneinander beabstandete photoelektrische Sensoren angeordnet sind und wobei durch eine elektronische Auswerteschaltung auf die genaue Position des Auftreffpunktes des Lichtstrahls auf der Fläche rückgeschlossen wird. Um die Positionserkennung zu verdeutlichen sind Flächenbereiche der Sensorfläche gegen Lichteinfall überhaupt abgeschattet, sodass auf der Sensorfläche nur an voneinander beabstandeten Teilflächen überhaupt Lichteinfall erfolgen kann.

Die Schriften DE 42 39 389 A1, EP 354 996 A2 und EP 225 625 A2 und die DE 35 11 757 A1 beschreiben optische Positionsmesseinrichtungen, bei denen an oder in einer lichtwellenleitenden Fläche fluoreszierende Moleküle angeordnet sind, welche von außen auftreffendes Licht in langwelligeres, diffus gestreutes Licht umwandeln, welches in der lichtwellenleitenden Fläche zu deren Flächenrändern hin geleitet wird und entweder schon dort in seiner Intensität durch Sensoren erfasst wird oder erst an einem anderen Ort zu dem es über Lichtleiter geführt wird. Da die Intensität des gemessenen Lichtes mit der Entfernung zum Auftreffpunkt des Lichtstrahles abnimmt, kann durch Kombination der Messergebnisse aus mehreren Sensoren auf den Auftreffpunkt des Lichtstrahles rückgeschlossen werden. Gegenüber der zuvor beschriebenen Methode, bei der das auftreffende Licht ohne Umwandlung im Wellenleiter zu den Sensoren geführt wird, ist vorteilhaft, dass das Signal weniger vom Winkel abhängig ist, mit dem der Lichtstrahl auf die Fläche trifft. Die Verwendung dieses Prinzips für ein Eingabegerät einer Datenverarbeitungsanlage ist in diesen Schriften nicht angedacht. Die Positionsauflösung ist zudem bei größeren Flächen dafür nicht ausreichend gut, da in den vorliegenden Schriften die Detektoren üblicherweise am Rand des Wellenleiters angebracht werden.

Die WO 2008/018768 A1 beschreibt ebenfalls eine solche optische Positionsmesseinrichtung, bei welcher an oder in einer lichtwellenleitenden Fläche fluoreszierende Moleküle angeordnet sind, welche von außen auftreffendes Licht in langwelligeres, diffus gestreutes Licht umwandeln, welches in der lichtwellenleitenden Fläche zu deren Flächenrändern hin geleitet wird und dort in seiner Intensität durch Sensoren erfasst wird. Die WO 2008/018768 A1 weist dabei gegenüber den vorzitierten Dokumenten den Unterschied auf, dass die Sensoren auch am Randbereich der lichtwellenleitenden Fläche auf deren Fläche aufgebracht sein können, das Detektionsprinzip und die Problematik bei größeren Flächen bleibt aber bestehen.

Der zur Zeit wichtigste Anwendungsfall für die Anwendung der Steuerfläche als optische Detektorfläche die als flexible Hüllfläche um einen oder an einem Körper angeordnet ist, ist die Detektion von Treffern bei Kampfsimulationen bzw. Kampfspielen, bei denen an Stelle von Schusswaffensimulationsgeräten die etwas Materielles wie einen Farbstoff oder einen weichen Schaumgummiball abfeuern, Leuchtgeräte eingesetzt werden, welche einen fokussierten Lichtimpuls absenden.

Neben dem bekannteren Kampfspiel "Paintball" bei welchem an Stelle von Projektilen mittels schusswaffenähnlicher Geräte harmlose, gut abwaschbare Farbkleckse verschossen werden, gibt es vermehrt auch Kampfspiele bei welchem mit Geräten, welche ansonsten in Aussehen und Handhabung einem Gewehr ähneln, kurze Laserlichtimpulse ausgesendet werden. Die teilnehmenden Personen, welche ja im Sinne des Spiels auch getroffen werden können, tragen eine Kleidung, an welcher in einem Abstandsraster von mehreren Zentimetern als photoelektrischen Sensoren angewendete Photodioden angebracht sind, welche das Auftreffen eines besagten Laserimpulses detektieren. Die Position der einzelnen Photodioden an einem Menschen ist in einer Datenverarbeitungsanlage registriert. Trifft ein Laserimpuls auf eine Photodiode, so wird dadurch ein Signal ausgelöst und an die Datenverarbeitungsanlage gesandt, wodurch in dieser der die betreffende Fotodiode an einer bestimmten Stelle seines Körpers tragende Mensch als an dieser Stelle seines Körpers getroffen registriert wird.

Als nachteilig wird empfunden, dass es bisher aus Kosten- und Handhabungsgründen nicht möglich war, die Teilnehmer flächendeckend mit photoelektrischen Sensoren auszustatten sondern nur mit einem relativ groben Raster. Damit ein Treffer sicher detektiert wird, müssen die Abmessungen der Querschnittsfläche des durch einen Laser ausgesandten Lichtstrahls mindestens so groß sein wie der Rasterabstand zwischen den einzelnen Photodioden. Damit ergeben sich konstruktive Probleme bei der Auslegung des Lasers. Des Weiteren ist eine genaue Auswertung des Trefferorts nur bei einer sehr dichten Anordnung der Sensoren möglich, was die Kosten für die Kleidung unmäßig in die Höhe treibt. Bei einer losen Anordnung der Sensoren muss der Lichtstrahl stark aufgeweitet werden, womit unter Umständen ein Treffer angezeigt wird, obwohl knapp neben die Zielperson gezielt wurde.

Die der Erfindung zu Grunde liegende Aufgabe besteht darin, eine Bauweise für eine Steuervorrichtung für eine Datenverarbeitungsanlage zur Verfügung zu stellen, wobei auf eine Steuerfläche ein Lichtstrahl gesendet wird und in Abhängigkeit vom Auftreffpunkt des Lichtstrahls auf der Steuerfläche die Datenverarbeitungsanlage beeinflusst wird, beispielsweise indem dem Auftreffpunkt eine Cursorposition in einem Menü oder auf einem virtuellen Schreib- oder Zeichenblatt zugeordnet wird. Gegenüber vorbekannten Steuervorrichtungen in denen dieses Prinzip verwirklicht ist, soll die zu schaffende Steuervorrichtung bei einfacher und kostengünstiger Bauweise auch auf größere Steuerflächen, beispielsweise Projektionsleinwände anwendbar sein und dabei dennoch eine sehr gute absolute Positionsauflösung aufweisen können.

In einem wichtigen Teilaspekt liegt die der Erfindung zu Grunde liegende Aufgabe darin, eine als Detektorfläche wirkenden Steuerfläche, welche als flexible Hüllfläche um einen Körper angeordnet sein kann zu schaffen, welche in einer für eine Datenverarbeitungsanlage brauchbaren Weise detektieren kann, ob und wo an einem Körper ein Lichtpunkt auftrifft. Im Unterschied zur vorgenannten Anordnung von in einem Raster zueinander beabstandet angeordneten "punktuellen" photoelektrischen Sensorelementen, soll die zu schaffende Detektorfläche bei einfacher und kostengünstiger Bauweise zumindest annähernd lückenlos photosensitiv sein.

Zum Lösen der Aufgabe wird gemäss Anspruch 1 eine auf optischen Signalen basierende Steuerfläche für eine Datenverarbeitungsanlage vorgeschlagen, wobei die Position eines Lichtflecks, welcher auf der Steuerfläche durch einen auf diese auftreffenden Lichtstrahl hervorgerufen wird, gemessen wird und in Abhängigkeit von dieser Position in der Datenverarbeitungsanlage eine Bearbeitungsmarkierung positioniert wird, wobei
die Steuerfläche ein flächiger Lichtwellenleiter ist, welcher eine Schicht aufweist, welche photolumineszente Partikel enthält, wobei am Lichtwellenleiter an einer Seite eine Mehrzahl von über die Fläche verteilte und in Abständen zueinander angeordnete kleinflächige photoelektrische Sensoren derart auf einer Schicht des Lichtwellenleiters angebracht sind, dass sie Licht, welches am Ort des Lichtflecks durch die dortigen photolumineszenten Partikeln erzeugt wurde und sich im Lichtwellenleiter ausbreitet, auskoppeln und dadurch ein elektrisches Signal generieren, dessen Größe von der Intensität des ausgekoppelten Lichtes abhängig ist, und wobei der Intensitätsverlust, welchen das Licht erfährt, wenn es sich im Lichtwellenleiter von dem Ort des Lichtflecks, an welchem es durch Photolumineszenz erzeugt wurde, bis zu einem Sensor ausbreitet, als Maß für die Entfernung zwischen dem Lichtfleck und diesem Sensor dient, was zur Bestimmung der Entfernung des Lichtflecks relativ zu mehreren Sensoren verwendet wird, wobei die Sensoren in einem Raster über die Fläche der Schicht verteilt aufgebracht sind.

Durch die photolumineszenten Partikel, beispielsweise sind dies Farbstoffmoleküle oder Halbleiternanopartikel, wird von außen auftreffendes Licht in gestreutes Licht mit längerer Wellenlänge umgewandelt. Dieses Licht wird großteils in den Wellenleiter eingekoppelt und breitet sich darin aus. Da sich das Licht im Wellenleiter ausbreitet und weiters die Lichtführung im Wellenleiter mit Verlusten behaftet ist, nimmt die Lichtintensität im Wellenleiter mit der Entfernung von der Emissionsquelle des Lichtes, also dem Punkt an welchem die Lumineszenz stattfindet, ab und damit auch das an den jeweiligen Sensoren erzeugte elektrische Signal. Wenn an einem Lichtwellenleiter mehrere Sensoren in einem Abstand zueinander angeordnet sind, kann aus dem Verhältnis der gemessenen Signalstärken an den einzelnen Sensoren mit datentechnisch automatisierbaren mathematischen Methoden auf die Auftreffposition des die Lumineszenz auslösenden Lichtstrahls auf der Steuerfläche rückgeschlossen werden.

Die gesamte Detektorfläche ist als einziger durchgehender Lichtwellenleiter realisiert. Dieser Lichtwellenleiter weist in einem Rasterabstand zueinander eine Vielzahl von kleinflächigen photoelektrischen Sensoren auf. In Abhängigkeit davon, wie nahe einzelne Sensoren dem jeweiligen Einkopplungspunkt von Licht in den Wellenleiter sind, ist ihr gemessenes Signal unterschiedlich stark. Damit kann aus der Amplitude von Signalen mehrerer Sensoren deren Lage auf dem Wellenleiter bekannt ist, auf den Einkopplungspunkt rückgerechnet werden.

Da beispielsweise durch die Auswahl der photolumineszenten Partikel eingestellt werden kann, dass nur ein bestimmtes, enges Spektrum von eintreffendem Licht überhaupt Lumineszenz auslöst, und indem ein Lichtzeiger verwendet wird, welcher genau in diesem Spektralbereich stark leuchtet, kann die Vorrichtung sehr gut unempfindlich gegenüber Umgebungslicht gemacht werden. Indem das im Lichtwellenleiter geleitete Licht an einer der beiden großen Oberflächenseiten der Steuerfläche abgegriffen wird und nicht zwangsweise im Bereich einer Stirnseite der Steuerfläche, kann die Vorrichtung auch bei sehr großflächiger Ausführung, beispielsweise als Projektionsleinwand, eine sehr gute absolute Positionsauflösung aufweisen, wenn sie nur mit einem entsprechend engen Raster von Messpunkten belegt ist.

Die erfindungsgemäße Steuerfläche ist in drei Skizzen veranschaulicht:

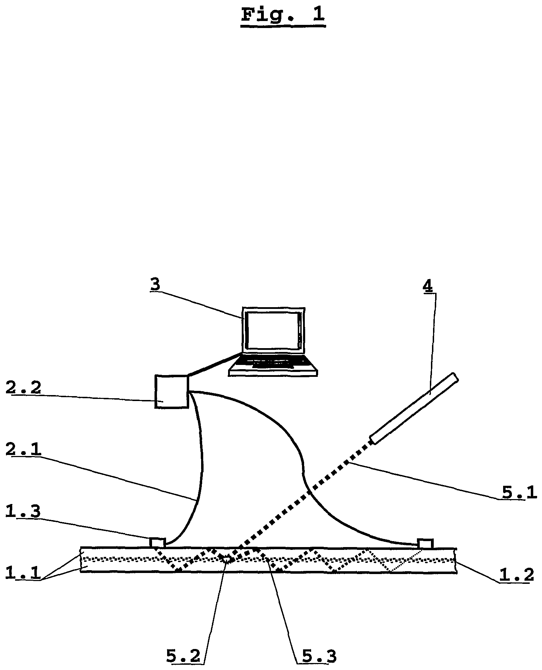

- Fig. 1:: zeigt symbolhaft die wesentlichen Elemente des zweiten Prinzips im Zusammenhang mit einer erfindungsgemäßen Steuerfläche. Die Steuerfläche selbst ist nicht maßstäblich in Querschnittsansicht skizziert, Lichtstrahlen sind durch punktierte Linien symbolisiert.
- Fig. 2:: veranschaulicht eine vorteilhafte Anwendungsweise einer erfindungsgemäßen Steuerfläche.
- Fig. 3:: veranschaulicht eine vorteilhafte Weiterentwicklung einer erfindungsgemäßen Steuerfläche einschließlich der damit möglich werdenden Anwendung als Touchpad.

Durch die photolumineszenten Partikel in der Schicht 1.2, beispielsweise sind dies Farbstoffmoleküle oder Halbleiternanopartikel, wird von außen auftreffendes Licht in gestreutes Licht mit längerer Wellenlänge umgewandelt. Dieses Licht wird großteils in den Wellenleiter eingekoppelt und breitet sich darin aus.

Da sich das Licht im Wellenleiter ausbreitet und weiters die Lichtführung im Wellenleiter mit Verlusten behaftet ist, nimmt die Lichtintensität im Wellenleiter mit der Entfernung von der Emissionsquelle des Lichtes, also dem Punkt an welchem die Lumineszenz stattfindet, ab und damit auch das an dem jeweiligen Sensor erzeugte elektrische Signal. Wenn an einen flächigen Lichtwellenleiter mehrere photoelektrischen Sensoren angeschlossen sind, kann aus dem Verhältnis der gemessenen Signalstärken an den einzelnen Sensoren mit datentechnisch automatisierbaren mathematischen Methoden auf die genauere Auftreffposition des die Lumineszenz auslösenden Lichtstrahls auf der Detektorfläche rück geschlossen werden.

Da beispielsweise durch die Auswahl der photolumineszenten Partikel eingestellt werden kann, dass nur ein bestimmtes, enges Spektrum von eintreffendem Licht überhaupt Lumineszenz auslöst, und indem ein Lichtzeiger verwendet wird, welcher genau in diesem Spektralbereich stark leuchtet, kann die Vorrichtung sehr gut unempfindlich gegenüber Umgebungslicht gemacht werden. Indem das im Lichtwellenleiter geleitete Licht an einer der beiden großen Oberflächenseiten der Detektorfläche abgegriffen wird und nicht zwangsweise im Bereich einer Stirnseiten der Detektorfläche, kann die Vorrichtung auch bei sehr großflächiger Ausführung, eine sehr gute absolute Positionsauflösung aufweisen, wenn sie nur mit einem entsprechend engen Raster von Messpunkten belegt ist.

Im skizzierten Beispiel besteht die Detektorfläche beispielsweise aus zwei ca. 0.1 mm dicken Deckschichten 1.1 aus PET, zwischen welchen eine ca. 0.001 mm dicke Schicht 1.2 aus einer homogenen Mischung des Kunststoffs Polyvinylalkohol und des Farbstoffs Rhodamin 6G laminiert ist. Die PET-Schichten 1.1 bilden mit der dazwischen liegenden Schicht 1.2 den Lichtwellenleiter. Die Schicht 1.2 ist photolumineszent. Sie ist so stark, dass ihre Absorption für normal darauf auftreffendes Licht mit 532 nm Wellenlänge über 80% beträgt. (Die dafür erforderliche Schichtstärke ist am besten durch Versuch zu ermitteln). In einem quadratischen Raster mit 5 cm Periodenlänge sind Silizium-Photodioden 1.3, welche eine Querschnittsfläche von etwa 2x2 mm² aufweisen, an der frei liegenden Seite einer der beiden PET-Schichten 1.2 so angebracht, dass sie Licht aus der PET-Schicht auskoppeln und an ihren pn-Übergang einkoppeln. Die Signale aller Photodioden 1.3 werden über elektrische Leitungen 2.1 und einen Frequenzfilter 2.2 einer Datenverarbeitungsanlage 3 zugeführt in welcher sie gemessen und verarbeitet werden.

Wenn ein Lichtfleck mit passendem Spektrum auf die Schicht 1.2 trifft, so löst er Lumineszenz in den integrierten Partikeln aus. Das dabei entstehende, langwelligere Licht wird zum großen Teil in den durch die Schichten 1.1 und 1.2 gebildeten Wellenleiter eingekoppelt. Das Licht in der Wellenleitermode schwächt sich durch die Verteilung und Dämpfung im Wellenleiter ab. Somit wird an den photoelektrischen Sensoren 1.3 eine unterschiedliche Intensität des Lichts in der Wellenleitermode gemessen, je nachdem wie weit der Auftreffpunkt des die Lumineszenz erzeugenden Lichts vom photoelektrischen Sensor entfernt ist. Durch Vergleich der Signale an den verschiedenen Sensoren kann auf die Position des Auftreffpunktes zurück geschlossen werden.

Zu bestimmungsgemäßen Signalen kommt es, weil mittels eines Lasers 4, welcher beispielsweise Teil eines Schusswaffensimulationsgerätes oder eines Laserpointers sein kann, ein frequenzmodulierter, grüner Laserstrahl 5.1 mit einer Wellenlänge von 532 nm auf die Steuerfläche gesandt wird. Dadurch wird auf der Steuerfläche ein Lichtfleck 5.2 erzeugt, welcher den Farbstoff zu Lumineszenz anregt. Das emittierte Licht 5.3 größerer Wellenlänge wird zum Teil in den durch die Schichten 1.1 und 1.2 gebildeten Wellenleiter eingekoppelt, breitet sich dort aus und verliert dabei mit steigender Entfernung vom Lichtfleck 5.2 an Intensität. Mit dem Abstand zwischen Auftreffpunkt des Laserstrahls 5.1 und der jeweiligen Photodiode wird das Signal der jeweiligen Photodiode geringer ausfallen. Dies wird zur Bestimmung der Entfernung des Auftreffpunktes relativ zu mehreren Photodioden verwendet.

Je nach Fläche und benötigter Auflösung können auf der Steuerfläche beliebig viele Sensoren, bevorzugt in einem regelmäßigen Muster, montiert werden. Für die Montage kann ein für die Emission des Farbstoffs transparent aushärtender Klebstoff verwendet werden, der einen guten optischen Kontakt zwischen Wellenleiter und Sensor herstellt. Je dichter die Sensoren montiert sind, desto größer ist das Signal und dementsprechend die Auflösung des Bauteils bei gleicher Ausleseelektronik. In Experimenten mit einem optimierten Wellenleiter auf Basis einer mit Farbstoffen dotierten Plastikplatte konnte eine Genauigkeit auf besser als +/-1 mm bei einem Abstand der Sensoren von 12cm in einem quadratischen Muster erlangt werden.

Eine erfindungsgemäße Steuerfläche kann beispielsweise als eine Schicht auf einer als Anzeigefläche für einen Computer dienenden Projektionsleinwand realisiert sein. Wird mit dem Laserpointer 4 auf diese Anzeigefläche gezeigt, so werden die Koordinaten jenes Punktes an welchem der Lichtstrahl 5.1 des Laserpointers 4 auf der Anzeigefläche trifft, in der beschriebenen Weise durch die Datenverarbeitungsanlage erkannt. Diesen Koordinaten kann durch das auf der Datenverarbeitungsanlage laufende Betriebssystem die Stellung eines Cursors, also einer ansonsten üblicherweise mittels "Maus" bewegten Einfügemarke, Schreibmarke bzw. Eingabemarkierung auf der Anzeigefläche zugeordnet werden.

Die beschriebene Steuerfläche ist auch in großflächiger Ausführung kostengünstig herstellbar. Z.B. für den Fall, dass sie vor Anzeigeflächen angeordnet werden soll, kann sie zur Gänze aus weitgehend durchsichtigen Materialien aufgebaut sein. Hierfür sind Farbstoffe, welche nur an den Rändern oder außerhalb des sichtbaren Lichtspektrums absorbieren, vonnöten.

Für den Fall, dass die Steuerfläche selbst als Projektionsfläche dienen sollen, kann sie beispielsweise mittels einer teiltransparenten Deckschicht nach außen hin optisch weiß oder silbrig ausgeführt sein. Im Allgemeinen ist sie mechanisch flexibel aufgebaut, damit kann sie nahezu auf allen gängigen Anzeigeflächen aufgebracht werden. Im Fall von durchsichtigen Anzeigeflächen kann sie auch hinter Anzeigeflächen angebracht werden.

Eine erfindungsgemäße Detektorfläche kann als flexible Schicht auf einer Kleidung für einen Menschen angebracht sein. Wird mit dem Laser 4 ein Lichtimpuls auf diese Detektorfläche gesandt, so wird werden die Koordinaten jenes Punktes an welchem der Lichtimpuls 5.1 des Lasers 4 auf der Anzeigefläche trifft, in der beschriebenen Weise durch die Datenverarbeitungsanlage erkannt.

Der Problematik, dass Umgebungslicht nicht fälschlicherweise als Auftreffpunkt des Leuchtzeigers zur Kennzeichnung eines Treffers interpretiert werden darf, kann sehr einfach Rechnung getragen werden. Zum einen kann der Spektralbereich des Lichtes welches Lumineszenz auslöst sehr eng um jene Spektrallinie gehalten werden, auf welcher der Laser 4 arbeitet. Zum anderen kann der Laser frequenzmoduliertes Licht abstrahlen. D.h. die Intensität des Laserstrahls 5.1 schwankt zeitlich mit einer bestimmten Frequenz. Diese Frequenz wird mit nachrichtentechnischen Mitteln aus den von den Photodioden 1.3 gelieferten Signalen herausgefiltert. Indem unterschiedlich frequenzkodierte Laserstrahlen verwendet werden, ist es durch die Anwendung von Frequenzfiltern möglich, mehrere gleichzeitig auftreffende Laserstrahlen zu unterscheiden und deren jeweilige Auftreffpositionen auf der Steuerfläche zu erkennen.

Umgebungslicht kann auch durch eine auf der Steuerfläche angebrachte Schicht weggefiltert werden, welche nur Licht in einem bestimmten Spektralbereich durchlässt.

In einer vorteilhaften Weiterentwicklung können die an der Detektorfläche vorhandenen photoelektrischen Sensoren zur Erzeugung von elektrischer Energie verwendet werden, welche z.B. für die Ausleseelektronik und eine drahtlose Datenübertragung genutzt wird.

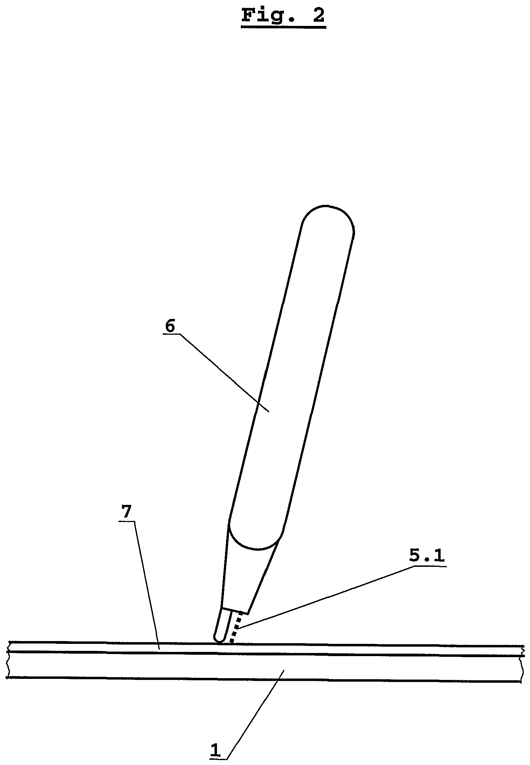

Im Anwendungsbeispiel gemäß Fig. 2 wird auf eine erfindungsgemäße Steuerfläche 1 eine beschreibbare Fläche 7, beispielsweise ein Blatt Papier oder eine abwischbare Folie aufgelegt und darauf wird mit einem Stift 6 von Hand geschrieben oder gezeichnet. Der Stift 6 gibt nicht nur Farbstoff an seiner Spitze ab sondern er sendet auch einen Lichtstrahl 5.1 (z.B. durch eine an eine Lichtleitfaser gekoppelte Leuchtdiode) an den Nahbereich jenes Punktes auf der Schicht 7, an welcher der Stift mit seiner Farbstoff abgebenden Spitze anliegt. Auch wenn die Schicht 7 ein scheinbar nicht transparentes Papier ist, reicht der durchdringende Teil des Lichtes durchaus aus um in der darunter liegenden Steuerfläche 1 in der oben beschriebenen Weise Signale zu generieren, durch welche seine Position an der Steuerfläche detektiert werden kann. Damit wird es einfach möglich, sowohl per Hand auf Papier oder Folie zu schreiben oder zu zeichnen, als auch das so Geschaffene gleichzeitig als Bilddatei in der Datenverarbeitungsanlage zwecks weiterer Verwendung und/oder Verarbeitung abzuspeichern. Indem nur mit einem Leuchtstift entlang Linien einer auf die Steuerfläche aufgelegten Zeichnung nachgefahren wird, kann sehr gut von bestehenden Zeichnungen selektiv in eine Bilddatei gepaust werden.

Ergänzend sei noch betont, dass der Lichtstrahl 5.1 nicht zwangsweise ein Laserstrahl sein muss. Es ist nur so, dass sich dann, wenn der Lichtstrahl 5.1 ein Laserstrahl ist, besonders vorteilhaftere Verhältnisse ergeben, da der Lichtstrahl damit in seinen Eigenschaften sehr exakt bestimmbar ist und die Detektion auch bei sehr großen Entfernungen von der Lichtquelle einfach möglich ist.

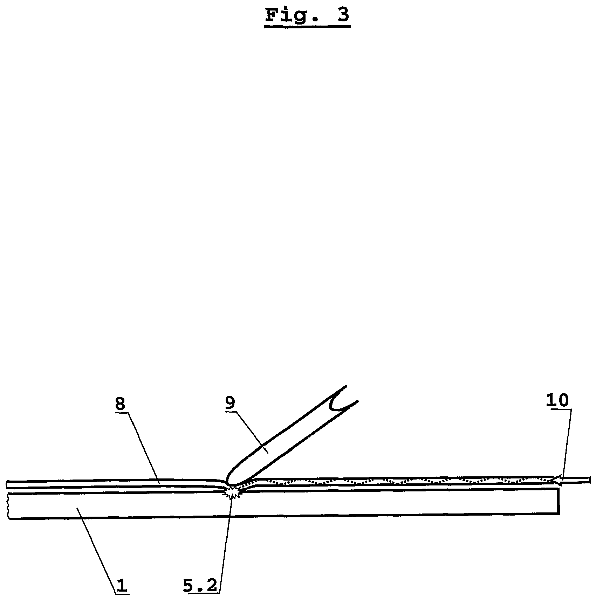

Eine in Fig. 3 skizzierte, sehr vorteilhafte zusätzliche Anwendbarkeit einer erfindungsgemäßen Steuerfläche 1 als Touchpad kann erreicht werden, indem parallel zu der erfindungsgemäßen Steuerfläche 1, in einem möglichst kleinen Abstand dazu, ein weiterer flächiger Wellenleiter 8 angeordnet ist, in welchen Licht 10, vorzugsweise von einer Stirnfläche her eingekoppelt ist. Der Wellenleiter 8 braucht keine Lumineszenzeigenschaften aufzuweisen. Wenn durch eine mechanische Beanspruchung, beispielsweise durch den Druck eines Fingers oder eines Griffels 9, Wellenleiter 8 und Steuerfläche 1 aneinander gedrückt werden, so wird am Ort der Berührung zwischen den beiden Flächen, Licht aus dem Wellenleiter 8 in die Steuerfläche 1 eingekoppelt, welches wie schon weiter oben beschrieben dort Lumineszenz hervorruft und die Positionsbestimmung ermöglicht. Damit ergibt sich eine sehr genaue Methode der Positionsbestimmung. Durch Frequenzmodulation des in den Wellenleiter 8 eingespeisten Lichts kann die Anordnung äußerst unempfindlich gegen Hintergrundlicht ausgeführt werden. Die Bauweise gemäß Fig. 3 kann im Übrigen dennoch durch einen Lichtzeiger steuerbar sein.

Die Anwendung zur Simulation von Schusswaffen wird optimalerweise verknüpft mit der Anbindung der Sensorflächen an ein mobiles Telekommunikationsgerät, welches die Trefferauswertung übernimmt und durch akustische und/oder optische Signale einen Treffer anzeigt. Des Weiteren kann das Telekommunikationsgerät eine drahtlose elektronische Verbindung zu einem Datenverarbeitungsgerät aufnehmen, um eine Auswertung des Geschehens auf einem Bildschirm oder über das Internet wiederzugeben.

Eine weitere vorteilhafte Anwendung ist die Montage der Detektorflächen an Oberflächen in und an Gebäuden, um sie als Schalter für verschiedene Einrichtungen wie z.B. Beleuchtung, Beschattungseinrichtungen, automatische Tore und Türen oder elektronische Geräte zu verwenden. Diese können mit einem Lichtzeiger aus der Entfernung aktiviert werden. Der Vorteil liegt darin, dass ein einziger Lichtzeiger als universelle Fernbedienung für eine Vielzahl von Anwendungen genutzt werden kann. Welche Anwendung in welcher Weise geschaltet wird, ergibt sich durch die Anordnung der Sensorflächen.

## Patentansprüche

1. Auf optischen Signalen basierende Steuerfläche (1) für eine Datenverarbeitungsanlage (3), wobei die Position eines Lichtflecks (5.2), welcher auf der Steuerfläche (1) durch einen auf diese auftreffenden Lichtstrahl (5.1) hervorgerufen wird, gemessen wird und in Abhängigkeit von dieser Position in der Datenverarbeitungsanlage (3) eine Bearbeitungsmarkierung positioniert wird, wobei die Steuerfläche (1) ein flächiger Lichtwellenleiter ist, welcher eine Schicht (1.2) aufweist, welche photolumineszente Partikel enthält, wobei am Lichtwellenleiter an einer Seite eine Mehrzahl von über die Fläche verteilte und in Abständen zueinander angeordnete kleinflächige photoelektrische Sensoren (1.3) derart auf einer Schicht (1.1) des Lichtwellenleiters angebracht sind, dass sie Licht, welches am Ort des Lichtflecks (5.2) durch die dortigen photolumineszenten Partikeln erzeugt wurde und sich im Lichtwellenleiter ausbreitet, auskoppeln und dadurch ein elektrisches Signal generieren, dessen Größe von der Intensität des ausgekoppelten Lichtes abhängig ist, und wobei der Intensitätsverlust, welchen das Licht erfährt, wenn es sich im Lichtwellenleiter von dem Ort des Lichtflecks (5.2), an welchem es durch Photolumineszenz erzeugt wurde, bis zu einem Sensor (1.3) ausbreitet, als Maß für die Entfernung zwischen dem Lichtfleck (5.2) und diesem Sensor (1.3) dient, was zur Bestimmung der Entfernung des Lichtflecks (5.2) relativ zu mehreren Sensoren (1.3) verwendet wird, **dadurch gekennzeichnet, dass**
die Sensoren (1.3) in einem Raster über die Fläche der Schicht (1.1) verteilt aufgebracht sind.

2. Steuerfläche nach Anspruch 1, **dadurch gekennzeichnet, dass** die Sensoren (1.3) in einem regelmäßigen Muster angeordnet sind.

3. Steuerfläche nach Anspruch 1, **dadurch gekennzeichnet, dass** die Sensoren (1.3) in einem quadratischen Raster angeordnet sind.

4. Steuerfläche nach Anspruch 3, **dadurch gekennzeichnet, dass** die Periodenlänge des quadratischen Rasters 5 cm beträgt.

5. Steuerfläche nach Anspruch 2, **dadurch gekennzeichnet, dass** die Sensoren (1.3) in einem quadratischen Muster angeordnet sind, wobei die Periodenlänge des quadratischen Musters 12 cm beträgt.

6. Steuerfläche (1) nach einem der vorhergehenden Ansprüche, **dadurch gekennzeichnet, dass** das Basismaterial des Lichtwellenleiters aus einem transparenten Polymer oder Polymermischung besteht, beziehungsweise aus einem transparenten Elastomer.

7. Steuerfläche (1) nach einem der vorhergehenden Ansprüche, **dadurch gekennzeichnet, dass** sich parallel zu ihr und mit Abstand ein weiterer flächiger Lichtwellenleiter (8) erstreckt, in welchen Licht (10) eingekoppelt ist, wobei bei Berührung der weitere Lichtwellenleiter (8) und die Steuerfläche (1) aneinander gedrückt werden, sodass am Ort der Berührung zwischen den beiden Flächen Licht aus dem Lichtwellenleiter (8) in die Steuerfläche (1) eingekoppelt wird.

8. Verfahren zum Betrieb einer auf optischen Signalen basierenden Steuerfläche (1) für eine Datenverarbeitungsanlage (3), wobei die Position eines Lichtflecks (5.2), welcher auf der Steuerfläche (1) durch einen auf diese auftreffenden Lichtstrahl (5.1) hervorgerufen wird, gemessen wird und in Abhängigkeit von dieser Position in der Datenverarbeitungsanlage (3) eine Bearbeitungsmarkierung positioniert wird, wobei am Ort des Lichtflecks (5.2) durch photolumineszente Partikel Licht generiert wird, dass sich dieses Licht in der als flächiger Lichtwellenleiter ausgebildeten Steuerfläche (1) ausbreitet, dass das Licht dabei an eine Mehrzahl von kleinflächigen photoelektrischen Sensoren (1.3) gelangt, welche an einer Seite auf einer Schicht (1.1) des Lichtwellenleiters in einem Raster über die Fläche verteilt und in Abständen zueinander derart angeordnet sind, dass sie Licht aus dem Wellenleiter auskoppeln und dadurch ein elektrisches Signal generieren, dessen Größe von der Intensität des ausgekoppelten Lichtes abhängig ist und wobei der Intensitätsverlust, welchen das Licht erfährt, wenn es sich im Lichtellenleiter von dem Ort des Lichtflecks (5.2), an welchem es durch Photolumineszenz erzeugt wurde, bis zu einem Sensor (1.3) ausbreitet, als Maß für die Entfernung zwischen dem Lichtfleck (5.2) und diesem Sensor (1.3) dient, was zur Bestimmung der Entfernung des Lichtflecks (5.2) relativ zu den mehreren Sensoren (1.3) verwendet wird.

9. Verfahren nach Anspruch 8, **dadurch gekennzeichnet, dass** auf die Steuerfläche (1) eine beschreibbare Schicht (7) aufgelegt wird und auf diese Schicht (7) mittels eines Stiftes (6) geschrieben wird, welcher einen Lichtstrahl an den Nahbereich jenes Punktes auf der Schicht (7) sendet, an welchem er mit einer Spitze anliegt.

10. Verfahren nach einem der Ansprüche 8 oder 9, **dadurch gekennzeichnet, dass** Licht aus einem weiteren flächigen Lichtwellenleiter (8), in welchen Licht (10) eingekoppelt ist, in die Steuerfläche (1) eingekoppelt wird, indem der Lichtwellenleiter (8) durch eine äußerlich angelegte mechanische Belastung in Kontakt mit der Steuerfläche (1) gebracht wird.

## Claims

1. An optical-signal based control surface (1) for a data processing system (3), wherein the position of a light spot (5.2) which is produced on the control surface (1) by a light beam (5.1) impinging on it is measured and a processing mark is positioned in the data processing system (3) depending on this position, wherein the control surface (1) is a planar optical waveguide comprising a layer (1.2) that contains photoluminescent particles, wherein a plurality of small-surface photoelectric sensors (1.3) distributed over the surface and arranged at distances from each other is mounted on one side of the optical waveguide on a layer (1.1) of the optical waveguide in such a way that they decouple light which has been generated at the location of the light spot (5.2) by the photoluminescent particles there and propagates in the optical waveguide and thereby generate an electrical signal whose magnitude is dependent on the intensity of the decoupled light, and wherein the intensity loss which the light experiences when it spreads in the optical waveguide from the location of the light spot (5.2) at which it was generated by photoluminescence to a sensor (1.3) serves as a measure of the distance between the light spot (5.2) and this sensor (1.3), which is used for determining the distance of the light spot (5.2) relative to several sensors (1.3), **characterised in that**
the sensors (1.3) are attached in a grid distributed over the surface of the layer (1.1).

2. Control surface according to Claim 1, **characterised in that** the sensors (1.3) are arranged in a regular pattern.

3. Control surface according to Claim 1, **characterised in that** the sensors (1.3) are arranged in a square grid.

4. Control surface according to Claim 3, **characterised in that** the period length of the square grid is 5 cm.

5. Control surface according to Claim 2, **characterised in that** the sensors (1.3) are arranged in a square pattern, wherein the period length of the square pattern is 12 cm.

6. Control surface (1) according to one of the foregoing Claims, **characterised in that** the base material of the optical waveguide consists of a transparent polymer or polymer mixture or a transparent elastomer.

7. Control surface (1) according to one of the foregoing Claims, **characterised in that** a further planar optical waveguide (8) extends parallel to it and at a distance thereto, into which light (10) is coupled, wherein the further optical waveguide (8) and the control surface (1) are pressed against each other upon contact, so that light from the optical waveguide (8) is coupled into the control surface (1) at the place of contact between the two surfaces.

8. A method for operating a control surface (1) based on optical signals for a data processing system (3), wherein the position of a light spot (5.2) which is produced on the control surface (1) by a light beam (5.1) impinging on it is measured and a processing mark is positioned in the data processing system (3) depending on this position,
wherein
at the location of the light spot (5.2) light is generated by photoluminescent particles such that this light propagates in the control surface (1) formed as a planar optical waveguide, in that the light is transmitted to a plurality of small-surface photoelectric sensors (1.3) which are distributed on one side on a layer (1.1) of the optical waveguide in a grid over the surface and are arranged at distances from each other in such a way that they decouple light from the waveguide and thereby generate an electrical signal whose magnitude depends on the intensity of the decoupled light and in which the loss of intensity which the light experiences when it propagates in the light waveguide from the location of the light spot (5.2) at which it was generated by photoluminescence to a sensor (1.3) serves as a measure of the distance between the light spot (5.2) and this sensor (1.3) which is used to determine the distance of the light spot (5.2) relative to the multiple sensors (1.3).

9. A method according to Claim 8, **characterised in that** a writeable layer (7) is applied to the control surface (1) and items are written on this layer (7) by means of a stylus (6) which sends a beam of light to the close-up region of that point on the layer (7) at which it rests with a tip.

10. A method according to one of Claims 8 or 9, **characterised in that** light is coupled into the control surface (1) from a further planar optical waveguide (8) into which light (10) is coupled by bringing the optical waveguide (8) into contact with the control surface (1) by means of an externally applied mechanical load.

## Revendications

1. Surface de commande (1) basée sur des signaux optiques pour une installation de traitement des données (3), avec laquelle la position d'un point lumineux (5.2) provoqué sur la surface de commande (1) par un faisceau lumineux (5.1) dirigé vers elle est mesurée pour placer une marque d'usinage dans l'installation de traitement des données (3) en fonction de cette position, la surface de commande (1) étant un conducteur plat en fibre optique présentant une couche (1.2) contenant des particules photoluminescentes, avec un grand nombre de capteurs photoélectriques de petite dimension (1.3) répartis uniformément sur la surface sur une couche (1.1) de la fibre optique, afin de découpler la lumière produite par les particules photoluminescentes au niveau du point lumineux (5.2) et se répandant dans la fibre optique, et de générer ainsi un signal électrique dont la taille dépend de l'intensité de la lumière découplée, la perte d'intensité subie par la lumière se répandant dans la fibre optique de l'emplacement du point lumineux (5.2) où elle a été produite par photoluminescence jusqu'à un capteur (1.3) servant de référence pour la distance entre le point lumineux (5.2) et ce capteur (1.3), et permettant ainsi de déterminer la distance entre le point lumineux (5.2) et plusieurs capteurs (1.3), **caractérisée en ce que**
Les capteurs (1.3) sont répartis dans une grille au-dessus de la surface de la couche (1.1).

2. Surface de commande selon la revendication 1, **caractérisée en ce que** les capteurs (1.3) sont disposés selon un modèle régulier.

3. Surface de commande selon la revendication 1, **caractérisée en ce que** les capteurs (1.3) sont disposés selon une trame carrée.

4. Surface de commande selon la revendication 3, **caractérisée en ce que** la durée de période de la trame carrée est de 5 cm.

5. Surface de commande selon la revendication 2, **caractérisée en ce que** les capteurs (1.3) sont disposés selon un modèle carré, la durée de période de la trame carrée étant de 12 cm.

6. Surface de commande (1) selon l'une des exigences ci-dessus, **caractérisée en ce que** le matériau de base du conducteur à fibre optique soit composé d'un polymère transparent ou d'un mélange de polymère ou d'un élastomère transparent.

7. Surface de commande (1) selon l'une des exigences ci-dessus, **caractérisée en ce qu'**un autre conducteur plat à fibre optique (8) s'étende parallèlement à une certaine distance de celle-ci, dans lequel la lumière (10) est couplée; en cas de contact, l'autre conducteur à fibre optique (8) et la surface de commande (1) sont appuyés l'un sur l'autre, de sorte qu'au point de contact entre les deux surfaces, la lumière du conducteur à fibre optique (8) soit couplée dans la surface de commande (1).

8. Procédé d'exploitation d'une surface de commande (1) basée sur des signaux optiques pour une installation de traitement des données (3), la position du point lumineux (5.2) provoqué par un faisceau lumineux (5.1) tombant sur la surface de commande (1) est mesurée, avec positionnement d'une marque d'usinage dans l'installation de traitement des données (3) en fonction de cette position,
la lumière étant
générée au niveau du point lumineux (5.2) par des particules photoluminescentes, de sorte que la lumière se répande dans la surface de commande (1), cette dernière se présentant sous forme de conducteur à fibre optique, et que la lumière arrive vers une multitude de petits capteurs photoélectriques (1.3) répartis à intervalles réguliers d'un côté sur une couche (1.1) du conducteur à fibre optique dans une trame au-dessus de la surface, permettant de découpler la lumière sortant du conducteur à fibre optique et de générer un signal électrique dont la taille dépend de l'intensité de la lumière découplée, la perte d'intensité subie par la lumière lorsqu'elle se répand dans la fibre optique du lieu du point lumineux (5.2) où elle a été produite par photoluminescence jusqu'à un capteur (1.3) servant de référence pour la distance entre le point lumineux (5.2) et ce capteur (1.3), et permettant ainsi de déterminer la distance entre le point lumineux (5.2) et plusieurs capteurs (1.3).

9. Procédé selon la revendication 8, **caractérisé en ce qu'**une couche inscriptible (7) soit posée sur la surface de commande (1), un stylo (6) permettant d'écrire sur cette couche (7) envoyant un faisceau lumineux dans la zone à proximité du point sur la couche (7), qu'il touche avec la pointe.

10. Procédé selon la revendication 8 ou 9, **caractérisé en ce que** la lumière provenant d'un autre conducteur plat à fibre optique (8) dans lequel elle est couplée (10) soit couplée dans la surface de commande (1), tandis que le conducteur à fibre optique (8) est placé en contact avec la surface de commande (1) par une charge mécanique externe.
